# FASCICULE DE BREVET EUROPEEN

(11) **EP 2 735 901 B1**
(45) Date de publication et mention de la délivrance du brevet: **12.04.2017**
(21) Numéro de dépôt: 13193444.0
(22) Date de dépôt: 19.11.2013
(51) Int. Cl.: G02B 27/10, G01J 3/28, H04N 3/14

(54) **Appareil d'imagerie à plusieurs ensembles de détection disposés dans un plan focal**
Bildgebungsgerät mit mehreren Erkennungseinheiten, die auf einer Brennebene angeordnet sind
Imaging apparatus with a plurality of detection units arranged in a focal plane

(30) Priorité: 21.11.2012 FR 1203131
(43) Date de publication de la demande: 28.05.2014
(73) Titulaire: Airbus Defence and Space SAS, 78130 Les Mureaux (FR)
(72) Inventeur: Tulet, Michel, 31130 Balma (FR); Planche, Gilles, 31280 Aigrefeuille (FR)
(74) Mandataire: Cabinet Plasseraud

(56) Documents cités:
- RIENSTRA J ET AL: "Multispectral focal plane assembly for satellite remote sensing", AEROSPACE CONFERENCE, 1998 IEEE SNOWMASS AT ASPEN, CO, USA 21-28 MARCH 1998, NEW YORK, NY, USA,IEEE, US, vol. 5, 21 mars 1998 (1998-03-21), pages 233-241, XP010287061, DOI: 10.1109/AERO.1998.685824 ISBN: 978-0-7803-4311-5
- JAMES MILLER ; SUKHBIR KULLAR ; DAVID COCHRANE ; NIXON O ; ANDREY LOMAKO AND CEES DRAIJER: "Hyperspectral and multispectral sensors for remote sensing", SPIE, PO BOX 10 BELLINGHAM WA 98227-0010, USA, vol. 7857, 12 octobre 2010 (2010-10-12), pages 78570o-1-78570o-9, XP040545829, DOI: 10.1117/12.876474
- CHRISTOPHE LATRY ET AL: "Staggered arrays for high resolution earth observing systems", PROCEEDINGS OF SPIE, vol. 7452, 21 août 2009 (2009-08-21), page 74520O, XP055025448, ISSN: 0277-786X, DOI: 10.1117/12.825884

## Description

La présente invention concerne un appareil d'imagerie à plusieurs ensembles de détection qui sont disposés dans un même plan focal.

La conception d'un appareil d'imagerie pour une mission spatiale d'observation dépend des objectifs de la mission, ainsi que de l'orbite du satellite ou de l'altitude de l'aéronef à bord duquel l'appareil est embarqué.

Par exemple, l'observation de la Terre depuis un satellite en orbite circulaire basse peut être réalisée lors d'un même passage du satellite à l'intérieur de plusieurs bandes adjacentes et parallèles au sens de défilement du satellite. Par orbite basse on entend une orbite pour laquelle l'altitude du satellite est comprise entre 400 km (kilomètre) et 1000 km. Chaque bande d'observation est appelée sous-fauchée dans le jargon de l'Homme du métier. Elle correspond approximativement à une ligne d'éléments photosensibles d'un ou plusieurs détecteur(s) qui est (sont) utilisé(s) à un même instant pour saisir l'image d'un segment transversal de la sous-fauchée.

Le balayage total résulte alors d'une combinaison entre l'acquisition continue d'images à l'intérieur de segments longitudinaux de sous-fauchées, et de décalages transversaux de la ligne de visée pour passer d'une sous-fauchée à une autre. Un tel mode de balayage est appelé «push-broom», et permet de saisir en image une bande totale de surface terrestre, appelée fauchée, dont la largeur est approximativement égale à celle d'une sous-fauchée, multipliée par le nombre de sous-fauchées. De cette façon, une largeur de fauchée de 20 à 30 km peut être obtenue avec une résolution au sol (GSD pour «ground sampling distance» en anglais) qui est inférieure à 1 m (mètre), par exemple de l'ordre de 0,5 m.

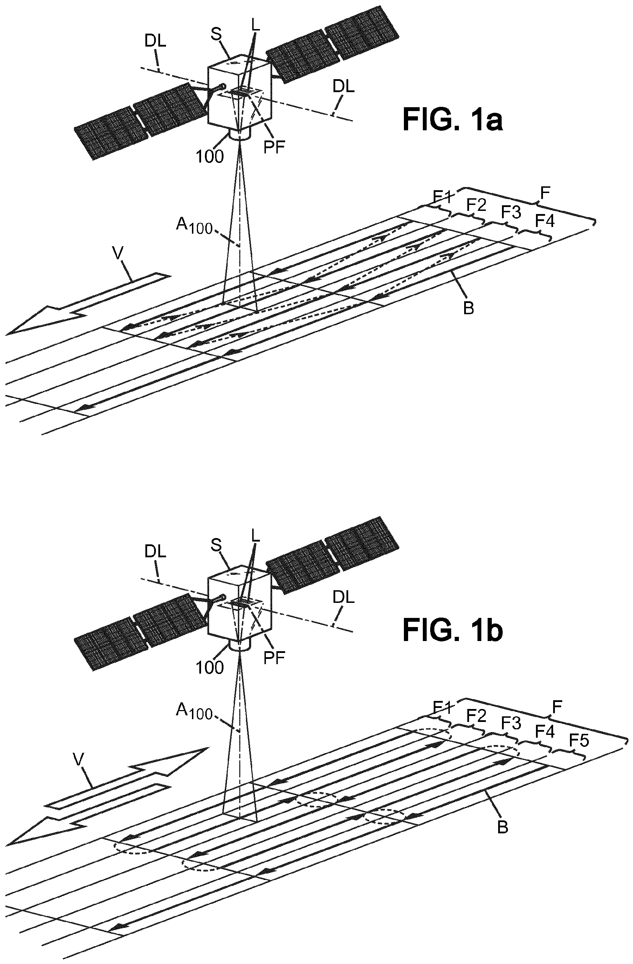

Selon un premier mode de balayage push-broom, les acquisitions d'image pour deux segments longitudinaux de sous-fauchées qui sont parcourus l'un après l'autre, sont réalisées avec le même sens de balayage. Ce sens de balayage est alors le sens de défilement du satellite. Ce premier mode, qui est désigné par push-broom unidirectionnel et est illustré par la figure 1a, nécessite de commander des retours en arrière rapides de la ligne de visée de l'appareil d'imagerie, entre les acquisitions successives de deux segments longitudinaux de sous-fauchées différentes.

Un second mode de balayage consiste à parcourir selon des sens qui sont opposés, des segments longitudinaux de sous-fauchées qui sont acquis successivement. Ce second mode de balayage, qui est illustré la figure 1 b, est désigné par push-broom bidirectionnel. Il permet de réduire le temps mort entre les acquisitions successives de segments longitudinaux de sous-fauchées différentes, puisque la ligne de visée décrit alors des allers-retours enchaînés, parallèlement à la direction de défilement du satellite. Chaque temps mort ne correspond plus qu'au décalage transversal de la ligne de visée d'une sous-fauchée à la suivante, et à l'inversion du sens de balayage.

Dans les figures 1a et 1 b, les références utilisées ont les significations suivantes :
- S :: satellite à bord duquel est embarqué l'appareil d'imagerie
- 100: optique de prise de vues de l'appareil d'imagerie
- A₁₀₀: ligne de visée de l'optique de prise de vues
- PF: plan focal de l'optique de prise de vues
- L: lignes d'éléments photosensibles dans le plan focal
- DL: direction des lignes d'éléments photosensibles
- F :: fauchée à la surface de la Terre
- B :: balayage de saisie d'image dans la fauchée entière
- F1-F5 :: sous-fauchées
- V :: sens de balayage en cours d'un segment longitudinal de sous-fauchée, qui est identifié dans la suite de la description par le sens de déplacement de l'image dans le plan focal

Les décalages transversaux de la ligne de visée ainsi que les éventuelles inversions du sens de balayage peuvent être exécutés de différentes manières, qui sont connues de l'Homme de métier. Par exemple, ils peuvent être réalisés à l'aide d'un miroir orientable qui est disposé devant l'entrée de l'optique de prise de vues 100, ou bien en variant l'attitude du satellite S de façon synchronisée avec son défilement sur l'orbite.

Les figures 1a et 1b montrent aussi l'orientation des lignes L d'éléments photosensibles dans le plan focal PF. Pour les deux modes de balayage push-broom unidirectionnel et bidirectionnel, l'attitude du satellite S est ajustée pour que les lignes L d'éléments photosensibles soient perpendiculaires à la direction longitudinale de la fauchée F, celle-ci étant parallèle à la trace au sol de l'orbite du satellite S. Par conséquent, les éléments photosensibles d'une même ligne L reçoivent simultanément les flux lumineux qui sont issus des points-sources d'un même segment transversal de sous-fauchée.

Outre la résolution et la largeur de fauchée, le cahier des charges d'une mission d'observation comporte aussi des contraintes sur les aspects suivants : la durée d'accumulation pour chaque point d'image, l'acquisition de données d'image simultanément pour plusieurs longueurs d'onde différentes, le coût et le poids de l'appareil d'imagerie, le positionnement les uns par rapport aux autres de tous les détecteurs qui sont utilisés, etc.

La mise en oeuvre de détecteurs à intégration par décalage temporel, ou TDI pour «time-delayed integration» en anglais, permet d'utiliser une taille d'éléments photosensibles qui est suffisamment réduite pour obtenir une résolution au sol qui est fine, avec une durée totale d'intégration qui est elle-même compatible avec des flux lumineux faibles. Mais les détecteurs d'image du type TDI ne peuvent fonctionner par principe que pour un balayage de sous-fauchée qui est effectué de sorte que l'image se déplace sur le détecteur dans le sens de transfert de ligne du fonctionnement TDI. Il n'est donc pas possible d'utiliser un unique détecteur TDI en mode de balayage push-broom bidirectionnel, si ce détecteur TDI possède un sens unique de transfert de ligne.

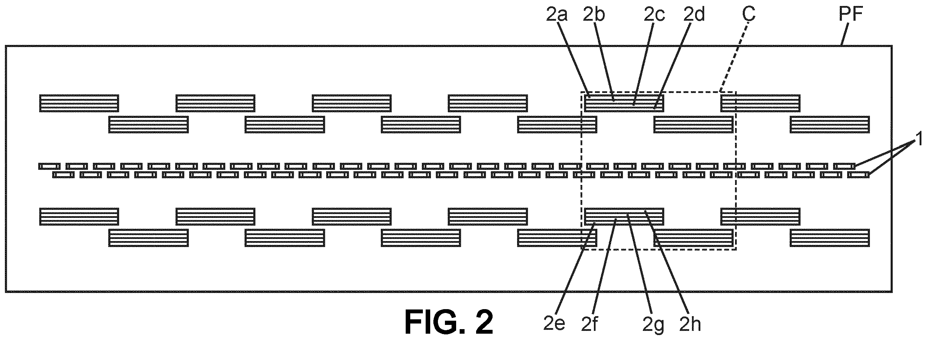

L'appareil d'imagerie WorldView-2 de DigitalGlobe résout cette incompatibilité entre la nature unidirectionnelle de la plupart des détecteurs TDI existants et le mode de balayage push-broom bidirectionnel. Pour cela, l'appareil WorldView-2 n'utilise que des détecteurs TDI chacun à deux sens possibles de transfert de ligne, qui sont opposés l'un par rapport à l'autre. La figure 2 reproduit la disposition des détecteurs d'image dans le plan focal PF, qui a été adoptée pour l'appareil WorldView-2. Deux rangées parallèles de détecteurs TDI qui sont affectés à une voie d'imagerie panchromatique à large fenêtre de transmission spectrale, et désignés par la référence 1, sont disposées dans le plan focal PF de l'appareil, avec des sens de transfert de ligne qui sont parallèles. Chaque détecteur TDI de la voie panchromatique peut donc être activé quelque soit le sens de balayage de sous-fauchée. Des détecteurs additionnels 2a-2h sont chacun formés d'une ligne d'éléments photosensibles. Ils sont aussi de type TDI à deux sens possibles de transfert de ligne. Tous les détecteurs 2a sont associés à des filtres de largeur spectrale étroite autour d'une première couleur, ceux 2b à des filtres de largeur spectrale encore étroite autour d'une deuxième couleur, etc pour les détecteurs 2c-2h. L'appareil d'imagerie WorldView-2 combine ainsi l'obtention d'une image polychromatique, c'est-à-dire saisie avec une largeur spectrale plus étendue, avec huit voies dites chromatiques, c'est-à-dire avec des largeurs spectrales qui sont inférieures à celle de la voie panchromatique, et avec une résolution au sol qui est fine, produite par la voie panchromatique. Le motif élémentaire de la disposition des détecteurs est contenu dans le cadre en traits pointillés C. Il est reproduit selon la direction des lignes d'éléments photosensibles, pour multiplier la largeur de sous-fauchée. Les recouvrements selon la direction de lignes pour des détecteurs de même type, et leurs décalages selon la direction perpendiculaire, permettent de résoudre une difficulté d'encombrement à l'intérieur du plan focal PF, et de raccorder les segments de lignes d'image qui sont saisis par des détecteurs distincts.

A cause du type à deux sens de transfert de ligne qui est utilisé pour les détecteurs TDI 1, de la voie panchromatique, chacun de ceux-ci est réalisé sur un substrat distinct, qui séparé de celui des détecteurs voisins 1 ou 2a-2h. En effet, chaque détecteur 1 possède deux registres de transfert et des ensembles correspondants de sorties des signaux de détection, qui sont situés aux extrémités opposées des colonnes d'éléments photosensibles de ces détecteurs. L'encombrement qui en résulte pour les connexions de sorties des détecteurs 1 de la voie panchromatique, empêche alors de réaliser l'un de ces détecteurs 1 sur un substrat qui serait commun avec certains des détecteurs 2a-2h des voies chromatiques.

Pour cette raison, l'appareil WorldView-2 comporte un très grand nombre de substrats séparés de détecteurs d'image, dont la disposition dans le plan focal à des emplacements précis est particulièrement longue à réaliser. En outre, les positions relatives de certains de ces substrats peuvent varier involontairement, produisant alors des erreurs d'alignement entre les images qui sont saisies par les détecteurs.

Dans d'autres appareils d'imagerie de conception différente, la disposition de détecteurs séparés dans des plans focaux qui sont différents nécessite de diviser spatialement le faisceau de formation d'image qui est produit par l'optique de prise de vues. Une telle conception à division de faisceau est plus complexe, car elle nécessite d'utiliser des composants optiques supplémentaires, et le poids ainsi que l'encombrement de l'appareil d'imagerie sont augmentés en conséquence.

L'utilisation de capteurs multispectraux réalisées sur un même substrat monobloc est notamment décrit dans les publications RIENSTRA J ET AL: "Multispectral focal plane assembly for satellite remote sensing",AEROSPACE CONFERENCE, 1998 IEEE vol. 5, pages 233-241 et James Miller ; Sukhbir Kullar ; David Cochrane ; Nixon O ; Andrey Lomako and Cees Draijer "Hyperspectral and multispectral sensors for remote sensing", Proc. SPIE 7857, Multispectral, Hyperspectral, and Ultraspectral Remote Sensing Technology, Techniques, and Applications III.

Dans ces conditions, la présente invention a pour but de fournir un appareil d'imagerie qui puisse être adapté simplement pour de nombreuses missions spatiales d'observation, notamment pour des missions à mode de balayage push-broom unidirectionnel ou bidirectionnel.

Un autre but de l'invention consiste à fournir un appareil d'imagerie pour lequel la disposition des détecteurs d'image dans le plan focal est simplifiée et rapide à réaliser.

Un autre but encore est de fournir un appareil d'imagerie dont la conception, le poids et l'encombrement sont réduits.

Pour cela, la présente invention propose un appareil d'imagerie qui est destiné à être embarqué à bord d'un satellite ou d'un aéronef, et qui comprend :
- une optique de prise de vues, qui est adaptée pour former une image dans un plan focal ;
- au moins deux ensembles de détection de flux lumineux, comprenant chacun séparément de l'autre (ou des autres) ensemble(s) de détection :
   - un détecteur principal de type unidirectionnel à plusieurs lignes parallèles de premiers éléments photosensibles qui sont juxtaposés selon une direction de lignes, les lignes étant décalées selon une direction de colonnes perpendiculaire à la direction de lignes et s'étendant toutes sur une même première longueur selon la direction de lignes, ce détecteur principal ayant un sens de transfert de ligne unidirectionnel parallèle à la direction de colonnes ; et
   - au moins un détecteur additionnel, comprenant chacun au moins une ligne de seconds éléments photosensibles qui sont juxtaposés parallèlement à la direction de lignes, chaque détecteur additionnel étant adapté pour saisir des images se déplaçant dans le plan focal parallèlement à la direction de colonnes.

L'appareil d'imagerie comprend en outre :
- pour chaque détecteur principal : un premier filtre disposé pour filtrer spectralement le flux lumineux qui parvient aux premiers éléments photosensibles du détecteur principal, avec une première fenêtre de transmission spectrale ; et
- pour chaque détecteur additionnel : un second filtre disposé pour filtrer spectralement le flux lumineux qui parvient aux seconds éléments photosensibles de ce détecteur additionnel, avec les première et seconde fenêtres de transmission spectrale qui sont différentes pour un même ensemble de détection.

Selon des premières caractéristiques de l'appareil d'imagerie de l'invention, le détecteur principal et chaque détecteur additionnel sont réalisés, pour chaque ensemble de détection séparément de l'autre (des autres) ensemble(s) de détection, sur un même substrat monobloc («single-piece substrate» en anglais) qui est dédié à cet ensemble de détection. En outre, la ligne de seconds éléments photosensibles de chaque détecteur additionnel s'étend selon la direction de lignes sur une seconde longueur qui est comprise entre 0,9 et 1,1 fois la première longueur, en étant décalée par rapport aux lignes du détecteur principal parallèlement à la direction de colonnes.

De préférence, la première et la seconde longueur, respectivement pour les lignes du détecteur principal et de chaque détecteur additionnel, sont égales à l'intérieur de chaque ensemble de détection.

Selon des secondes caractéristiques de l'invention, les substrats respectifs des deux ensembles de détection sont tous les deux disposés dans le même plan focal de l'optique de prise de vues, et orientés de sorte que leurs directions de colonnes respectives soient parallèles entre elles. De plus, ils sont disposés dans le plan focal de sorte des colonnes de bord respectives des détecteurs principaux de ces deux ensembles de détection, qui sont situées sur des bords des détecteurs principaux orientés vers un même côté du plan focal, ont un décalage entre elles, mesuré selon la direction de lignes, qui est inférieur à 5% de ladite première longueur.

La réalisation sur un même substrat, du détecteur principal et d'au moins un détecteur additionnel pour chaque ensemble de détection, est rendue possible par la sélection du type TDI unidirectionnel, c'est-à-dire à un seul sens de transfert de ligne, pour le détecteur principal. De cette façon, il ne possède qu'un seul registre de transfert, et qu'un seul ensemble correspondant de connexions de sorties, si bien qu'il présente un encombrement qui est compatible avec la disposition d'autres détecteurs sur le même substrat.

Ainsi, chaque ensemble de détection est constitué d'un bloc de détection séparé et rigide, à disposer dans le plan focal. De cette façon, le détecteur principal et le(s) détecteur(s) additionnel(s) d'un même ensemble de détection sont solidaires et ont une relation de position qui est fixée lors de la fabrication de cet ensemble de détection. Cette relation de position est définitive, et n'est pas sujette à subir des dispersions qui seraient introduites lors de l'assemblage dans le plan focal de l'optique de prise de vues, ni à subir des variations qui seraient causées ultérieurement par des dilatations thermiques ou des vibrations.

De plus, grâce au fait que les longueurs de lignes respectives du détecteur principal et du (des) détecteur(s) additionnel(s) d'un même ensemble de détection soient sensiblement identiques, de préférence égales, ces détecteurs sont aussi disposés pour s'inscrire à l'intérieur d'un périmètre qui est sensiblement rectangulaire. De cette façon, le substrat de chaque ensemble de détection peut avoir une forme périphérique qui est simple, notamment rectangulaire ou carrée, pour constituer un module de détection d'image.

En outre, lorsque l'appareil comprend plus que deux ensembles de détection, et que deux au moins d'entre eux sont juxtaposés par ailleurs dans le plan focal en étant décalés selon la direction de lignes, pour augmenter la largeur de sous-fauchée, la concordance des longueurs de lignes entre le détecteur principal et le (les) détecteur(s) additionnel(s) de chaque ensemble de détection simplifie les recouvrements d'extrémités de lignes à prévoir entre ces ensembles de détection. Notamment, des longueurs de recouvrement qui sont égales peuvent être prévues pour les détecteurs principaux et pour les détecteurs additionnels.

Les secondes caractéristiques de l'invention indiquent l'organisation modulaire des ensembles de détection à l'intérieur du plan focal. Les deux ensembles de détection sont disposés dans le plan focal avec des directions de colonnes respectives qui sont parallèles. Ainsi, tous les détecteurs peuvent être placés dans le plan focal d'une façon qui est simple et rapide. En effet, ils sont regroupés sur des substrats séparés, portant chacun un détecteur principal et au moins un détecteur additionnel, si bien que l'agencement dans le plan focal est réduit seulement au placement et à l'orientation de chaque substrat.

La conception de l'appareil d'imagerie, pouvant être à un seul plan focal, est aussi simplifiée et permet de réduire le nombre de composants optiques. Notamment, des composants spécifiques ne sont pas nécessaires pour diviser spatialement le faisceau lumineux de formation d'image selon plusieurs chemins optiques. Le poids et l'encombrement de l'appareil d'imagerie peuvent alors être réduits pour cette raison.

Préférablement, le décalage entre les colonnes de bord respectives des détecteurs principaux des deux ensembles de détection peut être nul, de sorte que ces colonnes de bord soient alignées l'une par rapport à l'autre selon la direction de colonnes.

Avantageusement, les seconds filtres peuvent être identiques pour deux détecteurs additionnels qui appartiennent respectivement à l'un et à l'autre des deux ensembles de détection. Dans ce cas, les substrats respectifs des deux ensembles de détection peuvent être connectés pour fournir une redondance de détecteur additionnel.

Eventuellement, chaque ensemble de détection peut comprendre plusieurs détecteurs additionnels, qui sont tous réalisés sur le substrat de cet ensemble en étant décalés selon la direction de colonnes. Tous les détecteurs additionnels comprennent alors chacun au moins une ligne de seconds éléments photosensibles qui sont juxtaposés parallèlement à la direction de lignes de l'ensemble de détection, et cette ligne s'étend encore sur une seconde longueur qui est comprise entre 0,9 et 1,1 fois la première longueur. De cette façon, la forme périphérique de chaque ensemble de détection à plusieurs détecteurs additionnels peut encore être sensiblement rectangulaire, si bien que la disposition des ensembles de détection dans le plan focal reste simplifiée.

Eventuellement, pour au moins l'un des ensembles de détection, les seconds filtres de deux détecteurs additionnels de cet ensemble de détection peuvent être identiques. Ces détecteurs additionnels peuvent alors être connectés pour fournir une redondance de détecteur additionnel.

D'une façon particulièrement avantageuse, tous les ensembles de détection qui sont utilisés dans un même appareil d'imagerie selon l'invention, peuvent être identiques. Une telle similarité concerne les ensembles de détection qui regroupent les détecteurs en modules élémentaires à disposer dans le plan focal. Mais elle ne concerne pas nécessairement les filtres qui sont associés respectivement et individuellement aux détecteurs.

Selon une première possibilité, les substrats respectifs des deux ensembles de détection peuvent être orientés en outre dans le plan focal de sorte que les sens de transfert de ligne respectifs des détecteurs principaux de ces deux ensembles de détection soient identiques. Cette première possibilité d'orientation peut être adaptée pour produire une imagerie stéréoscopique. Pour cela, les substrats des deux ensembles de détection sont disposés de sorte que chacun d'eux soit associé à une ligne de visée différente à travers l'optique de prise de vues. Alternativement, et lorsque les premiers filtres sont en plus identiques, les substrats respectifs des deux ensembles de détection peuvent être disposés et connectés pour fournir une redondance de détecteur principal.

Alternativement, une seconde possibilité consiste à orienter les substrats respectifs des deux ensembles de détection pour que les sens de transfert de ligne respectifs de leurs détecteurs principaux soient opposés. Cette seconde possibilité est compatible avec le mode de balayage push-broom bidirectionnel.

Par ailleurs, les filtres qui sont associés respectivement au détecteur principal et au(x) détecteur(s) additionnel(s) de chaque ensemble de détection peuvent être adaptés pour que le détecteur principal constitue une voie d'imagerie panchromatique, et chaque détecteur additionnel constitue une voie d'imagerie chromatique, c'est-à-dire dont la largeur spectrale est inférieure à celle de la voie panchromatique. Pour cela, la fenêtre de transmission spectrale de chaque filtre de détecteur additionnel peut être située à l'intérieur de la fenêtre de transmission spectrale du filtre de détecteur principal du même ensemble de détection, en étant beaucoup plus étroite que cette dernière.

Lorsque chaque ensemble de détection comprend au moins quatre détecteurs additionnels en plus du détecteur principal, deux ensembles identiques d'au moins quatre seconds filtres de détecteurs additionnels chacun peuvent être respectivement associés à une paire d'ensembles de détection disposés selon l'invention. Dans ce cas, mais d'une façon qui n'est pas limitative, chaque ensemble de seconds filtres peut comprendre des filtres dont les fenêtres de transmission spectrale sont séparées. Ces seconds filtres peuvent être identiques pour les deux ensembles de détection. Avantageusement, les premiers filtres respectifs des deux détecteurs principaux des ensembles de détection peuvent aussi être identiques, avec chacun une fenêtre de transmission spectrale qui s'étend entre 450 nm et 900 nm.

Encore pour des ensembles de détection à au moins quatre détecteurs additionnels chacun, et de façon encore non-limitative, huit seconds filtres peuvent être associés respectivement aux détecteurs additionnels des deux ensembles de détection. Dans cet autre cas, les premiers filtres respectifs des deux détecteurs principaux des ensembles de détection peuvent avoir respectivement des fenêtres de transmission spectrale qui sont différentes.

L'invention propose par ailleurs un procédé de réalisation d'un appareil d'imagerie, qui comprend les étapes suivantes :
- fournir les deux ensembles de détection de flux lumineux séparément sur deux substrats monoblocs qui sont dédiés respectivement aux deux ensembles de détection ;
- fournir l'optique de prise de vues ;
- disposer et orienter les substrats respectifs des deux ensembles de détection dans le même plan focal de l'optique de prise de vues de sorte que leurs directions de colonnes respectives soient parallèles entre elles, et en outre de sorte des colonnes de bord respectives des détecteurs principaux des dits deux ensembles de détection, situées sur des bords des dits détecteurs principaux orientés vers un même côté du plan focal, ont un décalage entre elles, mesuré selon la direction de lignes, qui est inférieur à 5% de ladite première longueur ; et
- disposer un premier filtre pour chaque détecteur principal et un second filtre pour chaque détecteur additionnel.

L'appareil d'imagerie qui est réalisé ainsi peut être conforme à la description précédente.

D'autres particularités et avantages de la présente invention apparaîtront dans la description ci-après d'exemples de réalisation non limitatifs, en référence aux dessins annexés, dans lesquels :
- les figures 1a et 1 b, déjà décrites, illustrent respectivement deux modes de balayage qui sont utilisés pour une observation terrestre réalisée à partir d'un satellite ;
- la figure 2, déjà décrite, représente une disposition connue de détecteurs à l'intérieur d'un plan focal ;
- les figures 3a à 3c représentent trois exemples d'ensembles de détection de flux lumineux, pouvant être utilisés dans des modes de réalisation de l'invention ;
- les figures 4a et 4b montrent deux dispositions d'ensembles de détection, qui sont possibles pour réaliser un appareil d'imagerie selon l'invention ;
- les figures 5a et 5b sont des diagrammes spectraux respectifs de deux ensembles de filtres pouvant être utilisés alternativement pour des appareils d'imagerie selon l'invention ; et
- les figures 6a et 6b montrent chacune trois exemples d'affectation de filtres pour des appareils d'imagerie selon l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

La description qui suit concerne des dispositions selon l'invention, de détecteurs de flux lumineux dans un même plan focal d'appareil d'imagerie. Il est entendu que cet appareil d'imagerie peut être utilisé à bord d'un satellite ou d'un aéronef, pour des conditions et objectifs de mission qui sont identiques à ceux qui ont été décrits en référence aux figures 1a et 1 b. Seront indiquées en outre celles des dispositions qui sont le plus adaptées au mode de balayage push-broom unidirectionnel de la figure 1a, et celles qui sont compatibles avec le mode de balayage push-broom bidirectionnel de la figure 1 b.

L'appareil d'imagerie comprend de façon générale une optique de prise de vues 100, qui forme une image d'une scène dans un plan focal PF. Tous les détecteurs de flux lumineux qui sont considérés dans la suite sont placés dans ce plan focal PF, c'est-à-dire qu'ils sont disposés de sorte que les surfaces collectrices de flux lumineux soient situées dans le plan PF. D'une façon qui est évidente pour l'Homme du métier, l'appareil comporte en outre tous les circuits nécessaires de synchronisation, de commande, de lecture et d'enregistrement qui sont nécessaires pour le fonctionnement des détecteurs de flux lumineux, si bien que ces circuits usuels ne sont pas décrits à nouveau.

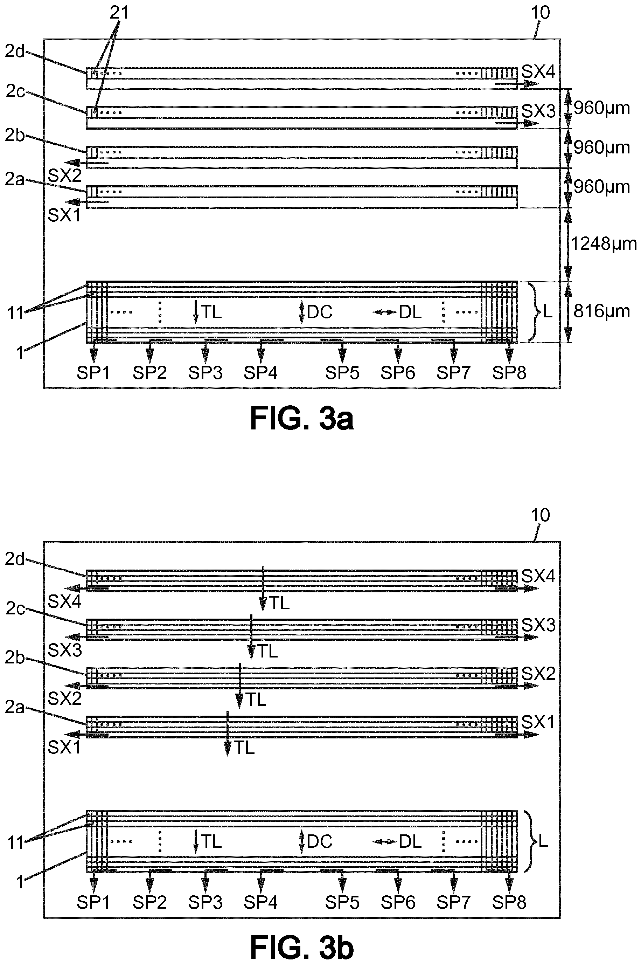

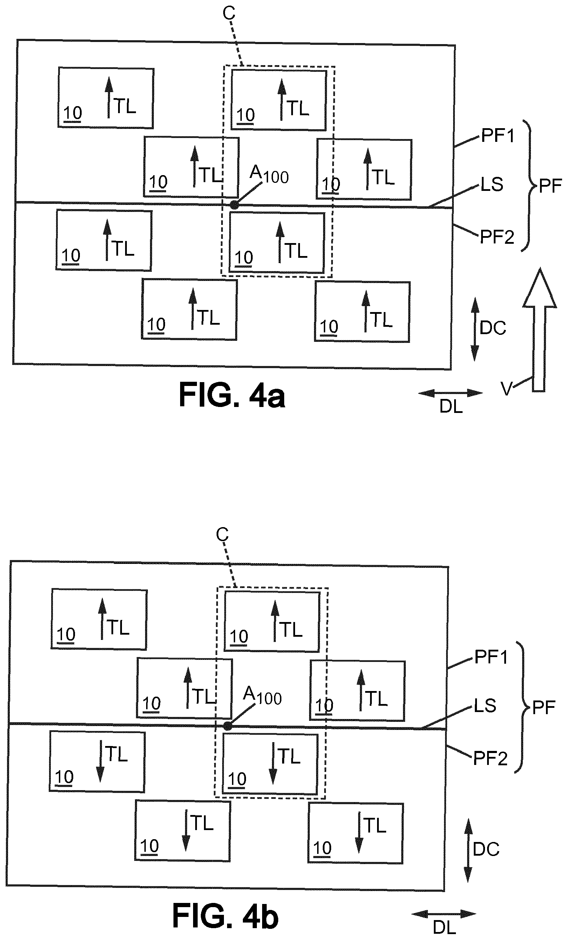

Les détecteurs de flux lumineux sont regroupés en modules élémentaires 10 qui sont identiques et séparés, et ces modules 10 sont disposés de différentes façons dans le plan focal PF. Les modules 10 ont été appelés précédemment ensembles de détection dans la partie générale de la description. La disposition des modules 10 dans le plan focal PF est adaptée en fonction des particularités de chaque mission d'observation, y compris le mode de balayage, étant entendu qu'un même modèle de modules élémentaires peut être utilisé avec des dispositions différentes. Une telle disposition modulaire à l'intérieur du plan focal constitue un aspect essentiel de la présente invention. Il en résulte une réduction de coût importante, grâce à la reprise du même modèle de modules élémentaires pour des missions d'observation différentes. L'alignement des détecteurs les uns par rapport aux autres à l'intérieur du plan focal est aussi simplifié, puisqu'il est réduit à l'alignement des modules élémentaires. Conformément à cet aménagement modulaire du plan focal, on décrit d'abord dans la suite trois exemples de modules élémentaires de détecteurs en référence aux figures 3a à 3c. Puis deux exemples de disposition des modules dans le plan focal PF sont décrits en référence aux figures 4a et 4b. Enfin, les fonctions chromatiques de plusieurs appareils d'imagerie selon l'invention sont décrites ensuite.

De façon générale pour l'invention, chaque module 10 comprend un détecteur principal et au moins un détecteur additionnel. A titre d'exemple pour toute la suite de la description, chaque module 10 comprend un détecteur principal qui est référencé 1 et quatre détecteurs additionnels qui sont référencés 2a-2d.

Dans tous les cas, le détecteur 1 est de type unidirectionnel. Il comporte une matrice carrée ou rectangulaire d'éléments photosensibles 11, à plusieurs lignes L qui sont toutes parallèles à la direction de lignes DL. Les éléments photosensibles 11 sont donc simultanément alignés en colonnes qui sont toutes parallèles à la direction de colonnes DC. Pour son fonctionnement de détection de flux lumineux, le détecteur principal 1 nécessite que l'image qui est formée par l'optique de prise de vues 100 sur les éléments photosensibles 11 se déplace parallèlement à la direction de colonnes DC, dans un sens fixé qui est appelé sens de transfert de ligne et noté TL. Ainsi, le détecteur principal 1 détermine par son orientation dans le plan focal PF, le sens de balayage de chaque sous-fauchée qui est saisie par ce détecteur 1. Ce mode de fonctionnement du détecteur principal 1 permet d'obtenir une sensibilité élevée pour la détection de flux lumineux qui sont faibles, malgré le déplacement de l'image par rapport aux éléments photosensibles 11. Par suite, les éléments 11 peuvent avoir des dimensions qui sont réduites, pour améliorer la résolution au sol désignée par GSD. Dans les exemples qui suivent, le détecteur principal 1 de chaque module 10 peut être du type à intégration par décalage temporel, ou TDI pour «time-delayed integration» en anglais. Le même détecteur principal 1 peut être repris pour les trois exemples de modules 10 des figures 3a à 3c.

Chaque détecteur additionnel 2a-2d du module 10 comporte au moins une ligne d'éléments photosensibles 21, qui s'étend parallèlement à la direction DL. Les éléments 21 ne sont pas nécessairement identiques aux éléments 20. Chaque détecteur additionnel 2a-2d peut être du type unidirectionnel ou bidirectionnel, mais tous les détecteurs additionnels d'un même module 10 sont de préférence du même de ces deux types. Lorsque l'un des détecteurs additionnels 2a-2d est du type bidirectionnel, il est adapté pour saisir une image qui se déplace dans le plan focal PF parallèlement à la direction de colonnes DC, aussi bien dans le sens de transfert de ligne TL du détecteur principal 1, lui-même monodirectionnel, que dans le sens opposé.

Au sein du module 10, le détecteur principal 1 et les détecteurs additionnels 2a-2d sont réalisés sur un même substrat rigide qui est dédié à ce module. Les détecteurs 1 et 2a-2d ont alors des positions relatives au sein du module qui sont fixes et déterminées lors de la fabrication du module. Ainsi, chaque module 10 est un composant monobloc, rigide et séparé des autres modules. Lorsque l'image qui est formée par l'optique de prise de vues 100 se déplace sur le module 10, son sens de déplacement est identique sur tous les détecteurs 1 et 2a-2d. De plus, la direction de lignes DL est commune à tous les détecteurs 1 et 2a-2d du module 10, et ces détecteurs ont avantageusement des longueurs de lignes qui sont identiques et des positions dans le module qui sont décalées selon la direction de colonnes DC. De cette façon, tous les détecteurs du module 10 saisissent des portions longitudinales d'une même sous-fauchée qui sont identiques, lors du balayage de cette sous-fauchée. Le sens de ce balayage est imposé par le détecteur principal 1 et, lorsque les détecteurs additionnels 2a-2d sont aussi du type unidirectionnel, ils doivent être orientés dans le module 10 pour fonctionner selon le même sens de transfert de ligne TL que le détecteur principal 1.

La figure 3a montre la répartition des surfaces collectrices de flux lumineux des éléments photosensibles 11 et 21 pour un premier exemple de module 10. Pour ce premier exemple, les détecteurs additionnels 2a-2d sont du type bidirectionnel, en comprenant chacun une ligne unique d'éléments photosensibles 21. Toutefois, les détecteurs additionnels 2a-2d peuvent comporter chacun plusieurs lignes d'éléments 21 tout en restant du type bidirectionnel. A titre d'illustration, le détecteur principal 1, du type TDI, peut comporter environ 7000 éléments photosensibles 11 par ligne L. Le détecteur principal 1 peut posséder plusieurs sorties de lecture qui sont notées SP1 à SP8, et qui sont disposées en parallèle pour lire simultanément des segments de ligne consécutifs selon la direction DL. La fréquence d'acquisition des lignes par l'ensemble du module 10, qui est déterminée le plus souvent par le détecteur 1, peut ainsi être augmentée. Chaque détecteur secondaire 2a-2d peut posséder 3500 éléments photosensibles 21 environ. SX1 à SX4 désignent les sorties de lecture respectives des détecteurs 2a-2d. Eventuellement, les résultats de lecture des éléments 21 peuvent être ajoutés pour chaque paire séparée d'éléments 21 adjacents. Plus généralement, les éléments photosensibles 11 du détecteur principal 1 peuvent avantageusement avoir un pas selon la direction de lignes DL, qui est inférieur à celui des éléments photosensibles 21 de chaque détecteur additionnel 2a-2d. Le module 10 est alors adapté pour produire des images selon le procédé «pan-sharpening», connu de l'Homme du métier. Pour cela, les détecteurs additionnels 2a-2d peuvent être équipés de quatre filtres chromatiques, et le détecteur principal 1 peut être équipé d'un filtre à large fenêtre de transmission spectrale, qui peut contenir celles des filtres des détecteurs 2a-2d. Dans toute la présente description, on entend par filtre chromatique un filtre qui est utilisé pour l'un des détecteurs 2a-2d, et dont la fenêtre spectrale de transmission est plus étroite que celle du filtre du détecteur principal 1. Par opposition aux filtres chromatiques des détecteurs 2a-2d, le filtre du détecteur principal 1 est dit panchromatique, bien qu'il soit possible qu'une des fenêtres spectrales chromatiques ne soit pas comprise dans la fenêtre spectrale panchromatique.

La figure 3b correspond à la figure 3a pour un deuxième exemple de module 10. Les détecteurs additionnels 2a-2d sont maintenant aussi du type unidirectionnel, avec plusieurs lignes d'éléments photosensibles 21 qui sont parallèles et décalées selon la direction de colonnes DC. Dans ce cas, le détecteur principal 1 et les détecteurs additionnels 2a-2d ont des sens de transfert de ligne TL respectifs qui sont tous identiques. Ce sens de transfert de ligne est donc imposé par tous les détecteurs du module 10, et non plus seulement par le détecteur principal 1. En particulier, les détecteurs additionnels 2a-2d peuvent aussi être du type TDI, par exemple chacun à trois lignes d'étages TDI.

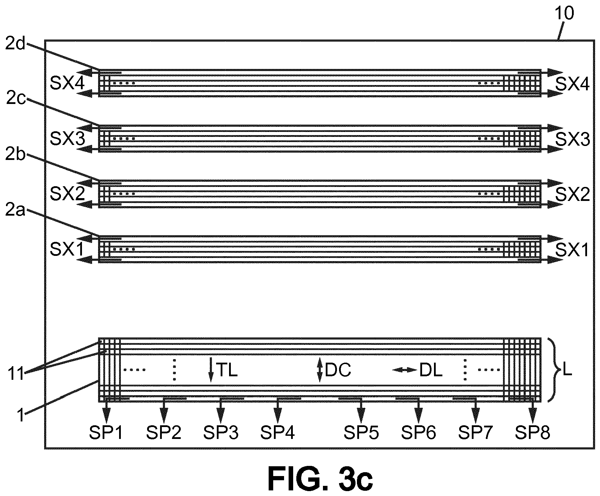

Enfin, la figure 3c correspond encore à la figure 3a pour un troisième exemple de module 10, de nouveau à détecteurs additionnels du type bidirectionnel. Chaque détecteur additionnel 2a-2d est maintenant un détecteur TDI à deux sens de transfert de ligne qui sont opposés. Ainsi, lors d'une saisie d'image par le module 10, les charges qui sont accumulées par les éléments 21 sont transférées soit dans le sens de transfert de ligne TL qui est défini pour le détecteur principal 1, soit dans le sens contraire, sélectivement en fonction du sens de déplacement de l'image à saisir sur le module 10.

De façon générale, tous les détecteurs d'un même module 10 peuvent être activés simultanément lorsque l'image se déplace dans le plan focal PF selon le sens de transfert de ligne TL du détecteur principal 1. Lorsque les détecteurs additionnels 2a-2d sont bidirectionnels (figures 3a et 3c), ils peuvent aussi être activés alors que le sens de déplacement de l'image dans le plan focal PF est opposé au sens de transfert de ligne TL du détecteur principal 1. Ce dernier est alors inactivé.

En référence aux figures 4a et 4b, on décrit maintenant plusieurs agencements des modules de détection 10 dans le plan focal PF de l'optique de prise de vues 100. Les figures 4a et 4b représentent chacune le plan focal PF, avec l'indication de son intersection avec l'axe optique A₁₀₀ de l'optique de prise de vues 100. Sauf dans les cas d'imagerie stéréoscopique, on suppose que l'axe optique A₁₀₀ est confondu avec la ligne de visée de l'appareil d'imagerie. Le plan focal PF est divisé en deux demi-plans complémentaires PF1 et PF2, avec une limite de séparation LS entre eux qui est rectiligne et coupe l'axe optique A₁₀₀.

Tous les modules 10 qui sont utilisés pour un même appareil d'imagerie sont orientés dans le plan focal PF pour avoir une même direction de lignes DL, et donc aussi une même direction de colonnes DC. Pour saisir des images selon le mode de balayage push-broom unidirectionnel ou bidirectionnel, l'appareil d'imagerie est orienté à bord du satellite S de sorte que la direction de colonnes DC soit parallèle au sens de déplacement V de l'image dans le plan focal PF. Comme il résulte de la description précédente des modules 10 qui sont destinés à être utilisés dans un appareil d'imagerie selon l'invention, l'orientation de chaque module est caractérisée de façon univoque par l'orientation du sens de transfert de ligne TL de son détecteur principal 1.

De préférence, tous les modules 10 qui sont utilisés pour un même appareil d'imagerie, sont identiques les uns aux autres.

Dans chacune des figures 4a et 4b, le cadre C en traits interrompus désigne le motif d'agencement des modules 10 dans le plan focal PF. Les deux modules 10 qui forment ce motif sont alignés l'un par rapport à l'autre selon la direction de colonnes DC. Eventuellement, un décalage transversal entre ces deux modules 10 du motif peut être mis en oeuvre selon la direction de lignes DL, mais en restant inférieur à 5% de la longueur des lignes L des détecteurs principaux 1. Le motif du cadre C peut être répété plusieurs fois, par exemple quatre fois, avec des décalages successifs selon la direction de lignes DL, pour augmenter la largeur effective de sous-fauchée. Lors de ces répétitions, le motif peut simultanément être décalé selon la direction de colonnes DC, pour optimiser un compromis entre l'encombrement entre des modules 10 qui sont voisins dans le plan focal PF d'une part, et la concentration des détecteurs autour de l'axe optique A₁₀₀ d'autre part, pour réduire des distorsions d'image. En outre, deux motifs successifs selon la direction de lignes DL sont avantageusement décalés de sorte que les lignes d'éléments photosensibles des modules présentent des recouvrements d'extrémités de lignes. De tels recouvrements, qui peuvent être d'une centaine d'éléments photosensibles 11, permettent de raccorder facilement les segments de lignes d'image qui sont saisis par des modules 10 séparés.

Dans l'agencement de la figure 4a, les modules 10 sont tous orientés de sorte que leurs sens de transfert de ligne TL soient identiques, et ceci dans l'ensemble du plan focal PF. Ainsi, tous les détecteurs des modules 10 peuvent être utilisés en même temps, dès lors que le sens de déplacement V de l'image dans le plan focal PF corresponde au sens de transfert de lignes TL. Pour un tel agencement, deux détecteurs qui sont identiques au sein de chaque motif, peuvent être connectés pour fournir une redondance. Une telle redondance permet à l'un de ces détecteurs d'être utilisé à la place de l'autre, au cas où ce dernier deviendrait défaillant. Pour cela, les deux détecteurs concernés sont équipés de filtres identiques. Tel est le cas pour les deux détecteurs principaux 1 de modules 10 qui sont situés à un même niveau selon la direction de lignes DL, ou pour deux détecteurs additionnels de ces modules. Pour les détecteurs additionnels 2a-2d, une telle redondance peut être obtenue ainsi aussi bien entre deux détecteurs additionnels qui appartiennent à un même module 10, que pour deux détecteurs additionnels qui appartiennent à des modules 10 différents mais situés à un même niveau selon la direction de lignes DL.

L'agencement de la figure 4a est adapté pour le mode de balayage push-broom unidirectionnel, puisque la direction de transfert de ligne TL est unique. Par contre, un tel appareil d'imagerie n'est pas bien adapté pour le mode de balayage push-broom bidirectionnel, puisqu'il serait alors nécessaire de retourner l'appareil autour de l'axe optique A₁₀₀ entre deux segments longitudinaux de sous-fauchée qui sont parcourus dans des sens opposés.

L'agencement de la figure 4a est aussi adapté pour fournir une imagerie stéréoscopique d'une scène qui est contenue dans le champ objet, avec deux lignes de visée distinctes qui sont mises en oeuvre simultanément. Dans le jargon de l'Homme du métier, une telle observation stéréoscopique est dite «stéréo native». Pour cela, ceux des modules 10 qui sont contenus dans le demi-plan PF1 sont associés à travers l'optique de prise de vues 100 à une première ligne de visée, et ceux des ceux des modules 10 qui sont contenus dans le demi-plan PF2 sont associés, aussi à travers l'optique de prise de vues 100, à une seconde ligne de visée qui est différente de la première mais. De tels systèmes d'imagerie stéréo native ont déjà été présentés par ailleurs, si bien qu'il n'est pas nécessaire de les décrire à nouveau ici. Il est seulement rappelé que l'optique de prise de vues 100 peut être combinée pour cela à un système de division de faisceau et à des systèmes de détermination des deux lignes de visée séparées. De préférence, la division du faisceau lumineux de formation d'image est effectuée conformément à la répartition des modules 10 entre les deux demi-plans PF1 et PF2.

Dans l'agencement de la figure 4b, les modules 10 d'un même demi-plan PF1 ou PF2 sont tous orientés de sorte que leurs sens de transfert de ligne TL soient encore identiques à l'intérieur de ce demi-plan. Mais ce sens est inversé entre les deux demi-plans PF1 et PF2. Ainsi, les modules 10 du demi-plan PF1 d'une part, et ceux du demi-plan PF2 d'autre part, peuvent être activés alternativement, en fonction de celui des demi-plans pour lequel le sens de transfert de lignes TL est identique au sens de déplacement de l'image dans le plan focal PF. Un tel agencement est particulièrement adapté pour le mode de balayage push-broom bidirectionnel. Dans ce cas, l'image de chaque segment longitudinal de sous-fauchée est saisie avec les modules 10 de celui des deux demi-plans PF1 et PF2 pour lequel le sens de transfert de ligne TL est identique au sens de déplacement de l'image dans le plan focal PF.

A cause des sens de transfert de ligne TL qui sont opposés pour les détecteurs principaux 1 de deux modules 10 du même motif d'agencement, aucune redondance de détecteur principal ne peut être obtenue. Il en est de même pour les détecteurs additionnels 2a-2d lorsque ceux-ci sont aussi du type unidirectionnel, comme dans le cas du module 10 de la figure 3b. Par contre, lorsque les détecteurs additionnels 2a-2d sont du type bidirectionnel, c'est-à-dire pour des modules 10 qui sont conformes à l'une des figures 3a et 3c, une redondance de détecteur additionnel peut être obtenue de la même façon et sous les mêmes conditions que pour l'agencement de la figure 4a.

Il est entendu que les deux agencements des figures 4a et 4b sont valables dès lors qu'un motif complet est réalisé, tel que contenu dans le cadre C, même si ce motif n'est pas répété plusieurs fois.

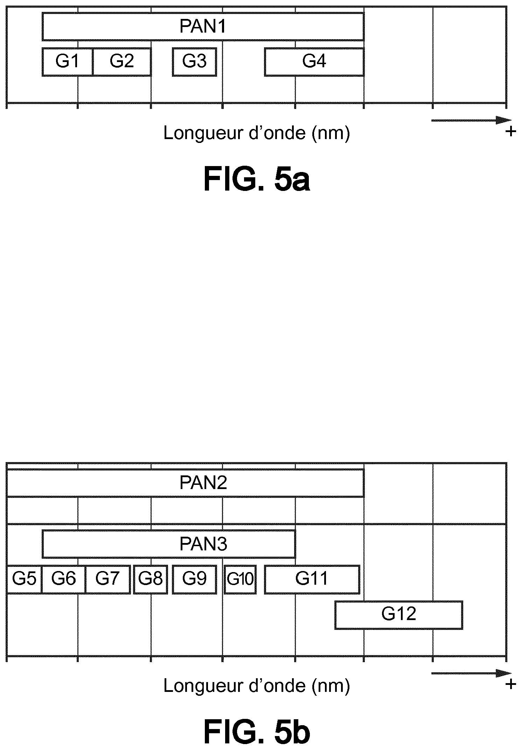

On décrit maintenant deux ensembles de filtres qui peuvent être utilisés dans des appareils d'imagerie selon l'invention, en référence aux figures 5a et 5b.

Le premier ensemble de filtres (figure 5a) est adapté pour fournir quatre voies chromatiques et une voie panchromatique. Chaque filtre G1 à G4 est destiné à être associé avec un détecteur additionnel 2a-2d, et le filtre PAN1 est destiné à être associé avec un détecteur principal 1.

Le second ensemble de filtres (figure 5b) est adapté pour fournir huit voies chromatiques et deux voies panchromatiques. Chaque filtre G5 à G12 est destiné à être associé avec un détecteur additionnel 2a-2d, et chaque filtre PAN2 ou PAN3 est destiné à être associé avec un détecteur principal 1.

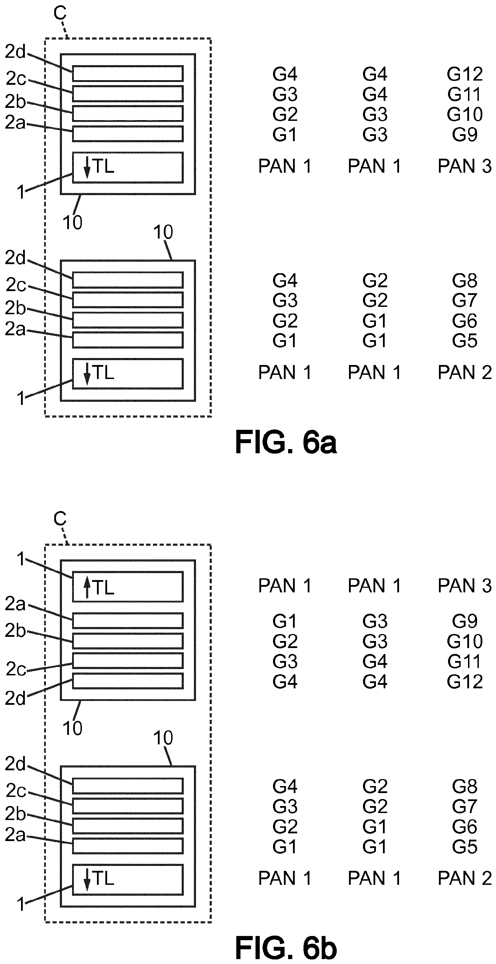

La figure 6a montre deux affectations possibles des filtres du premier ensemble, et une affectation des filtres du second ensemble, pour le motif d'agencement de deux modules 10 de la figure 4a (cadre C dans cette figure). Il est rappelé que ce motif est mieux adapté au mode de balayage push-broom unidirectionnel, et éventuellement pour une imagerie stéréo native. Des redondances de voies sont obtenues entre les deux détecteurs principaux 1 d'une part, et pour chaque paire de détecteurs additionnels 2a-2d qui sont pourvus de filtres identiques d'autre part. Chacune des affectations de filtres qui est donnée à titre d'exemple est indiquée par l'une des colonnes de la partie droite de la figure 6a, et les filtres qui sont affectés aux différents détecteurs 1 et 2a-2d, sont respectivement inscrits aux mêmes niveaux que les détecteurs concernés. Pour l'affectation de la première colonne, c'est-à-dire la colonne de gauche, les redondances de détecteurs additionnels sont réalisées entre l'un et l'autre des deux modules 10. Pour l'affectation de la seconde colonne, les redondances de détecteurs additionnels sont réalisées au sein de chaque module 10. Enfin, la troisième colonne montre l'affectation des dix filtres du second ensemble, sans redondance.

La figure 6b correspond à la figure 6a pour le motif d'agencement de deux modules 10 de la figure 4b, mieux adapté au mode de balayage push-broom bidirectionnel. L'affectation du premier ensemble de filtres, qui est indiquée en première colonne, ne procure de redondance de détecteurs additionnels 2a-2d que si ceux-ci sont bidirectionnels. Dans ce cas, la redondance est obtenue entre des détecteurs additionnels 2a-2d qui appartiennent respectivement à l'un et à l'autre des deux modules, à condition qu'ils soient pourvus de filtres identiques. Les affectations des deuxième et troisième colonnes ne permettent d'obtenir des images pour tous les filtres chromatiques et pour les deux sens de balayage que si les détecteurs additionnels 2a-2d sont encore bidirectionnels. Par contre, l'affectation de la seconde colonne procure une redondance des détecteurs additionnels qui sont utilisés pour chaque sens de déplacement d'image dans le plan focal PF.

Il est entendu que la présente invention peut être reproduite en modifiant certains aspects des modes de réalisation qui ont été décrits en détail, mais tout en conservant certains au moins des avantages qui ont été cités. En particulier, la répartition des modules 10 dans deux moitiés du plan focal PF avec une ligne de séparation LS qui est rectiligne et qui coupe l'axe optique A₁₀₀, n'est pas indispensable. De même, le placement des deux modules 10 qui appartiennent à un même motif d'agencement, à un même niveau le long de la direction de lignes DL, n'est pas indispensable non plus.

## Revendications

1. Appareil d'imagerie destiné à être embarqué à bord d'un satellite (S) ou d'un aéronef, comprenant :
- une optique de prise de vues (100), adaptée pour former une image dans un plan focal (PF) ;
- au moins deux ensembles de détection de flux lumineux (10), comprenant chacun séparément :
. un détecteur principal (1) de type unidirectionnel à plusieurs lignes (L) parallèles de premiers éléments photosensibles (11) juxtaposés selon une direction de lignes (DL), les dites lignes étant décalées selon une direction de colonnes (DC) perpendiculaire à la direction de lignes et s'étendant toutes sur une même première longueur selon ladite direction de lignes, ledit détecteur principal ayant un sens de transfert de ligne (TL) unidirectionnel parallèle à la direction de colonnes ; et
. au moins un détecteur additionnel (2a-2d), comprenant chacun au moins une ligne de seconds éléments photosensibles (21) juxtaposés parallèlement à la direction de lignes (DL), chaque détecteur additionnel étant adapté pour saisir des images se déplaçant dans le plan focal (PF) parallèlement à la direction de colonnes ;
- pour chaque détecteur principal (1), un premier filtre disposé pour filtrer spectralement le flux lumineux parvenant aux premiers éléments photosensibles (11) dudit détecteur principal, avec une première fenêtre de transmission spectrale ; et
- pour chaque détecteur additionnel (2a-2d), un second filtre disposé pour filtrer spectralement le flux lumineux parvenant aux seconds éléments photosensibles (21) dudit détecteur additionnel, avec une seconde fenêtre de transmission spectrale différente de la première fenêtre de transmission spectrale pour un même ensemble de détection (10),
dans lequel, pour chaque ensemble de détection (10) séparément de l'autre ensemble de détection, le détecteur principal (1) et chaque détecteur additionnel (2a-2d) sont réalisés sur un même substrat monobloc dédié audit ensemble de détection, avec la ligne de seconds éléments photosensibles (21) s'étendant selon la direction de lignes sur une seconde longueur comprise entre 0,9 et 1,1 fois la première longueur, et étant décalée par rapport aux lignes du détecteur principal parallèlement à la direction de colonnes (DC), les substrats respectifs des deux ensembles de détection (10) étant disposés tous les deux dans le même plan focal (PF) de l'optique de prise de vues (100), et orientés de sorte que les directions de colonnes (DC) respectives des dits ensembles de détection soient parallèles entre elles,
et les dits substrats des deux ensembles de détection (10) étant en outre disposés dans le plan focal (PF) de sorte que les colonnes de bord respectives des détecteurs principaux (1) des dits deux ensembles de détection, situées sur des bords des dits détecteurs principaux orientés vers un même côté du plan focal (PF), ont un décalage entre elles, mesuré selon la direction de lignes (DL), qui est inférieur à 5% de ladite première longueur.

2. Appareil selon la revendication 1, dans lequel les substrats des deux ensembles de détection (10) sont en outre disposés dans le plan focal (PF) de sorte les colonnes de bord respectives des détecteurs principaux (1) des dits deux ensembles de détection, sont alignées l'une par rapport à l'autre selon la direction de colonnes (DC).

3. Appareil selon l'une quelconque des revendications précédentes, dans lequel les ensembles de détection (10) sont identiques.

4. Appareil selon l'une quelconque des revendications 1 à 3, dans lequel les substrats respectifs des deux ensembles de détection (10) sont orientés en outre dans le plan focal (PF) de sorte que les sens de transfert de ligne (TL) respectifs des détecteurs principaux (1) des dits deux ensembles de détection soient identiques.

5. Appareil selon la revendication 4, dans lequel les premiers filtres respectifs des détecteurs principaux (1) sont identiques, et les substrats respectifs des deux ensembles de détection (10) sont disposés et connectés pour fournir une redondance de détecteur principal.

6. Appareil selon la revendication 4, dans lequel l'optique de prise de vues (100) et les ensembles de détection (10) sont disposés pour produire une imagerie stéréoscopique, avec chaque ensemble de détection qui est associé à une direction de visée différente à travers l'optique de prise de vues.

7. Appareil selon l'une quelconque des revendications 1 à 3, dans lequel les substrats respectifs des deux ensembles de détection (10) sont orientés en outre dans le plan focal (PF) de sorte que les sens de transfert de ligne (TL) respectifs des détecteurs principaux (1) des dits deux ensembles de détection soient opposés.

8. Appareil selon l'une quelconque des revendications précédentes, dans lequel les premiers éléments photosensibles (11) ont un pas inférieur à un pas des seconds éléments photosensibles (21) selon la direction de lignes (DL).

9. Appareil selon l'une quelconque des revendications précédentes, dans lequel le détecteur principal (1) de chaque ensemble de détection (10) est de type TDI.

10. Appareil selon l'une quelconque des revendications 1 à 9, dans lequel au moins un détecteur additionnel (2a-2d) de chaque ensemble de détection (10) est de type bidirectionnel, adapté pour saisir une image se déplaçant dans le plan focal (PF) parallèlement à la direction de colonnes (DC), aussi bien dans le sens de transfert de ligne (TL) du détecteur principal (1) que dans le sens opposé audit sens de transfert de ligne.

11. Appareil selon la revendication 10, dans lequel le détecteur additionnel (2a-2d) du type bidirectionnel de chaque ensemble de détection (10) comprend une ligne unique de seconds éléments photosensibles (21).

12. Appareil selon la revendication 10, dans lequel le détecteur additionnel (2a-2d) du type bidirectionnel de chaque ensemble de détection (10), est du type TDI à deux sens de transfert de ligne opposés.

13. Appareil selon l'une quelconque des revendications 1 à 9, dans lequel au moins un détecteur additionnel (2a-2d) de chaque ensemble de détection (10) est aussi du type unidirectionnel, avec plusieurs lignes de seconds éléments photosensibles (21) parallèles et décalées selon la direction de colonnes (DC),
ledit détecteur additionnel de type unidirectionnel (2a-2d) et le détecteur principal (1) d'un même ensemble de détection (10) ayant des sens de transfert de ligne (TL) qui sont identiques.

14. Appareil selon la revendication 13, dans lequel le détecteur additionnel (2a-2d) de chaque ensemble de détection (10) qui est du type unidirectionnel, est du type TDI.

15. Appareil selon l'une quelconque des revendications précédentes, dans lequel les seconds filtres sont identiques pour deux détecteurs additionnels (2a-2d) appartenant respectivement à l'un et à l'autre des deux ensembles de détection (10), et les substrats respectifs des dits deux ensembles de détection sont connectés pour fournir une redondance de détecteur additionnel.

16. Appareil selon l'une quelconque des revendications précédentes, dans lequel chaque ensemble de détection (10) comprend plusieurs détecteurs additionnels (2a-2d) réalisés sur le substrat dudit ensemble de détection, en étant décalés selon la direction de colonnes (DC), et chaque détecteur additionnel comprend au moins une ligne de seconds éléments photosensibles (21) juxtaposés parallèlement à la direction de lignes (DL) dudit ensemble de détection, et s'étendant selon ladite direction de lignes sur une seconde longueur comprise entre 0,9 et 1,1 fois la première longueur.

17. Appareil selon la revendication 16 dans lequel, pour au moins un même des ensembles de détection (10), les seconds filtres de deux détecteurs additionnels (2a-2d) dudit ensemble de détection sont identiques, et les dits détecteurs additionnels sont connectés pour fournir une redondance de détecteur additionnel.

18. Appareil selon la revendication 16 ou 17, dans lequel chaque ensemble de détection (10) comprend le détecteur principal (1) et au moins quatre détecteurs additionnels (2a-2d).

19. Appareil selon la revendication 18, dans lequel deux ensembles identiques d'au moins quatre seconds filtres de détecteurs additionnels (2a-2d) chacun, sont respectivement associés aux deux ensembles de détection (10), et dans lequel les premiers filtres respectifs des deux détecteurs principaux (1) des dits ensembles de détection (10) sont identiques.

20. Appareil selon la revendication 18, dans lequel huit seconds filtres sont associés respectivement aux détecteurs additionnels (2a-2d) des deux ensembles de détection (10),
et dans lequel les premiers filtres respectifs des détecteurs principaux (1) des dits deux ensembles de détection (10) ont respectivement des fenêtres de transmission spectrale qui sont différentes.

21. Procédé de réalisation d'un appareil d'imagerie destiné à être embarqué à bord d'un satellite (S) ou d'un aéronef, comprenant les étapes suivantes :
- fournir au moins deux ensembles de détection de flux lumineux (10), chaque ensemble de détection comprenant sur un substrat monobloc dédié audit ensemble de détection et séparément de l'autre ensemble de détection :
. un détecteur principal (1) de type unidirectionnel à plusieurs lignes parallèles de premiers éléments photosensibles (11) juxtaposés selon une direction de lignes (DL), les dites lignes étant décalées selon une direction de colonnes (DC) perpendiculaire à la direction de lignes et s'étendant toutes sur une même première longueur selon ladite direction de lignes, ledit détecteur principal ayant un sens de transfert de ligne (TL) unidirectionnel parallèle à la direction de colonnes ; et
. au moins un détecteur additionnel (2a-2d), comprenant chacun au moins une ligne de seconds éléments photosensibles (21) juxtaposés parallèlement à la direction de lignes (DL), avec ladite ligne de seconds éléments photosensibles s'étendant selon la direction de lignes sur une seconde longueur comprise entre 0,9 et 1,1 fois la première longueur, et étant décalée par rapport aux lignes du détecteur principal (1) parallèlement à la direction de colonnes (DC), et chaque détecteur additionnel (2a-2d) étant adapté pour saisir des images se déplaçant dans le plan focal (PF) parallèlement à la direction de colonnes (DC) ;
- fournir une optique de prise de vues (100), adaptée pour former une image dans un plan focal (PF) ;
- disposer et orienter les substrats respectifs des deux ensembles de détection (10) dans le même plan focal (PF) de l'optique de prise de vues (100), de sorte que les directions de colonnes (DC) respectives des dits ensembles de détection (10) soient parallèles entre elles, et en outre de sorte que les colonnes de bord respectives des détecteurs principaux (1) des dits deux ensembles de détection, situées sur des bords des dits détecteurs principaux orientés vers un même côté du plan focal (PF), ont un décalage entre elles, mesuré selon la direction de lignes (DL), qui est inférieur à 5% de ladite première longueur ;
- pour chaque détecteur principal (1) : disposer un premier filtre pour filtrer spectralement le flux lumineux parvenant aux premiers éléments photosensibles (11) dudit détecteur principal, avec une première fenêtre de transmission spectrale ; et
- pour chaque détecteur additionnel (2a-2d) : disposer un second filtre pour filtrer spectralement le flux lumineux parvenant aux seconds éléments photosensibles (21) dudit détecteur additionnel, avec une seconde fenêtre de transmission spectrale différente de ladite première fenêtre de transmission spectrale, pour un même ensemble de détection.

22. Procédé selon la revendication 21, mis en oeuvre pour que l'appareil d'imagerie soit conforme à l'une quelconque des revendications 1 à 20.

## Patentansprüche

1. Bildgebungsgerät, das vorgesehen ist, an Bord eines Satelliten (S) oder eines Flugzeugs mitgeführt zu werden, umfassend:
- eine Ansichtenaufnahmeoptik (100), die geeignet ist, ein Bild in einer Brennebene (PF) auszubilden;
- zumindest zwei Lichtstromerkennungseinheiten (10), die jeweils separat Folgendes umfassen:
. einen Hauptdetektor (1) des unidirektionalen Typs mit mehreren parallelen Zeilen (L) erster lichtempfindlicher Elemente (11), die in einer Zeilenrichtung (DL) nebeneinanderliegen, wobei die Zeilen in einer zur Zeilenrichtung senkrechten Spaltenrichtung (DC) verschoben sind und sich alle in der Zeilenrichtung über eine selbe erste Länge erstrecken, wobei der Hauptdetektor eine unidirektionale, zur Spaltenrichtung parallele Zeilentransfer (TL)-Richtung aufweist; und
. zumindest einen Zusatzdetektor (2a - 2d), der jeder zumindest eine Zeile zweiter lichtempfindlicher Elemente (21) die parallel zur Zeilenrichtung (DL) nebeneinanderliegen, umfasst, wobei jeder Zusatzdetektor geeignet ist, Bilder zu erfassen, die sich in der Brennebene (PF) parallel zur Spaltenrichtung bewegen;
- für jeden Hauptdetektor (1) einen ersten Filter, der angeordnet ist, um den auf die ersten lichtempfindlichen Elemente (11) des Hauptdetektors treffenden Lichtstrom spektral zu filtern, mit einem ersten spektralen Transmissionsfenster und
- für jeden Zusatzdetektor (2a - 2d) einen zweiten Filter, der angeordnet ist, um den auf die zweiten lichtempfindlichen Elemente (21) des Zusatzdetektors treffenden Lichtstrom spektral zu filtern, mit einem zweiten spektralen Transmissionsfenster, das sich bei einer selben Erkennungseinheit (10) vom ersten spektralen Transmissionsfenster unterscheidet,
wobei bei jeder Erkennungseinheit (10) getrennt von der anderen Erkennungseinheit der Hauptdetektor (1) und jeder Zusatzdetektor (2a - 2d) auf einem selben, für die Erkennungseinheit bestimmten Monoblock-Substrat ausgeführt sind, wobei sich die Zeile zweiter lichtempfindlicher Elemente (21) in der Zeilenrichtung über eine zweite Länge im Bereich des 0,9- bis 1,1-fachen der ersten Länge erstreckt und zu den Zeilen des Hauptdetektors parallel zur Spaltenrichtung (DC) verschoben ist,
wobei die jeweiligen Substrate der beiden Erkennungseinheiten (10) alle beide in derselben Brennebene (PF) der Ansichtenaufnahmeoptik (100) angeordnet und so ausgerichtet sind, dass die jeweiligen Spaltenrichtungen (DC) der Erkennungseinheiten parallel zueinander sind,
und wobei die Substrate der beiden Erkennungseinheiten (10) ferner so in der Brennebene (PF) angeordnet sind, dass die jeweiligen Randspalten der Hauptdetektoren (1) der beiden Erkennungseinheiten, die sich an den zu einer selben Seite der Brennebene (PF) ausgerichteten Rändern der Hauptdetektoren befinden, eine Verschiebung zueinander aufweisen, die, in der Zeilenrichtung (DL) gemessen, geringer als 5 % der ersten Länge ist.

2. Gerät nach Anspruch 1, wobei die Substrate der beiden Erkennungseinheiten (10) ferner so in der Brennebene (PF) angeordnet sind, dass die jeweiligen Randspalten der Hauptdetektoren (1) der beiden Erkennungseinheiten in der Spaltenrichtung (DC) zueinander ausgerichtet sind.

3. Gerät nach einem der vorangehenden Ansprüche, wobei die Erkennungseinheiten (10) identisch sind.

4. Gerät nach einem der Ansprüche 1 bis 3, wobei die jeweiligen Substrate der beiden Erkennungseinheiten (10) ferner so in der Brennebene (PF) ausgerichtet sind, dass die jeweiligen Zeilentransfer (TL)-Richtungen der Hauptdetektoren (1) der beiden Erkennungseinheiten identisch sind.

5. Gerät nach Anspruch 4, wobei die jeweiligen ersten Filter der Hauptdetektoren (1) identisch sind und die jeweiligen Substrate der beiden Erkennungseinheiten (10) angeordnet und verbunden sind, um eine Hauptdetektorredundanz bereitzustellen.

6. Gerät nach Anspruch 4, wobei die Ansichtenaufnahmeoptik (100) und die Erkennungseinheiten (10) angeordnet sind, um eine stereoskopische Bildgebung erzeugen, wobei jede Erkennungseinheit einer unterschiedlichen Blickrichtung durch die Ansichtenaufnahmeoptik zugeordnet ist.

7. Gerät nach einem der Ansprüche 1 bis 3, wobei die jeweiligen Substrate der beiden Erkennungseinheiten (10) ferner so in der Brennebene (PF) ausgerichtet sind, dass die jeweiligen Zeilentransfer (TL)-Richtungen der Hauptdetektoren (1) der beiden Erkennungseinheiten entgegengesetzt sind.

8. Gerät nach einem der vorangehenden Ansprüche, wobei die ersten lichtempfindlichen Elemente (11) in der Zeilenrichtung (DL) eine Teilung aufweisen, die kleiner als eine Teilung der zweiten lichtempfindlichen Elemente (21) ist.

9. Gerät nach einem der vorangehenden Ansprüche, wobei der Hauptdetektor (1) jeder Erkennungseinheit (10) vom TDI-Typ ist.

10. Gerät nach einem der Ansprüche 1 bis 9, wobei zumindest ein Zusatzdetektor (2a - 2d) jeder Erkennungseinheit (10) vom bidirektionalen Typ ist, der geeignet ist, ein Bild zu erfassen, das sich in der Brennebene (PF) parallel zur Spaltenrichtung (DC) sowohl in der Zeilentransfer (TL)-Richtung des Hauptdetektors (1) als auch in der zur Zeilentransferrichtung entgegengesetzten Richtung bewegt.

11. Gerät nach Anspruch 10, wobei der Zusatzdetektor (2a - 2d) des bidirektionalen Typs jeder Erkennungseinheit (10) eine einzige Zeile zweiter lichtempfindlicher Elemente (21) umfasst.

12. Gerät nach Anspruch 10, wobei der Zusatzdetektor (2a - 2d) des bidirektionalen Typs jeder Erkennungseinheit (10) vom TDI-Typ mit zwei entgegengesetzten Zeilentransferrichtungen ist.

13. Gerät nach einem der Ansprüche 1 bis 9, wobei zumindest ein Zusatzdetektor (2a - 2d) jeder Erkennungseinheit (10) ebenfalls vom unidirektionalen Typ ist, mit mehreren Zeilen zweiter lichtempfindlicher Elemente (21), die in der Spaltenrichtung (DC) parallel und verschoben sind,
wobei der Zusatzdetektor des unidirektionalen Typs (2a - 2d) und der Hauptdetektor (1) einer selben Erkennungseinheit (10) Zeilentransfer (TL)-Richtungen aufweisen, die identisch sind.

14. Gerät nach Anspruch 13, wobei der Zusatzdetektor (2a - 2d) jeder Erkennungseinheit (10), der vom unidirektionalen Typ ist, vom TDI-Typ ist.

15. Gerät nach einem der vorangehenden Ansprüche, wobei die zweiten Filter bei zwei Zusatzdetektoren (2a - 2d), die zu der einen bzw. der anderen der beiden Erkennungseinheiten (10) gehören, identisch sind und die jeweiligen Substrate der beiden Erkennungseinheiten verbunden sind, um eine Zusatzdetektorredundanz bereitzustellen.

16. Gerät nach einem der vorangehenden Ansprüche, wobei jede Erkennungseinheit (10) mehrere Zusatzdetektoren (2a - 2d) umfasst, die auf dem Substrat der Erkennungseinheit ausgeführt sind, indem sie in der Spaltenrichtung (DC) verschoben sind, und wobei jeder Zusatzdetektor zumindest eine Zeile zweiter lichtempfindlicher Elemente (21), die parallel zur Zeilenrichtung (DL) der Erkennungseinheit nebeneinanderliegen und sich in der Zeilenrichtung über eine zweite Länge im Bereich des 0,9- bis 1,1-fachen der ersten Länge erstrecken, umfasst.

17. Gerät nach Anspruch 16, wobei bei zumindest einer selben der Erkennungseinheiten (10) die zweiten Filter zweier Zusatzdetektoren (2a - 2d) der Erkennungseinheit identisch sind und die Zusatzdetektoren verbunden sind, um eine Zusatzdetektorredundanz bereitzustellen.

18. Gerät nach Anspruch 16 oder 17, wobei jede Erkennungseinheit (10) den Hauptdetektor (1) und zumindest vier Zusatzdetektoren (2a - 2d) umfasst.

19. Gerät nach Anspruch 18, wobei zwei identische Einheiten von zumindest vier zweiten Filtern von Zusatzdetektoren (2a - 2d) jeweils den beiden Erkennungseinheiten (10) zugeordnet sind und
wobei die jeweiligen ersten Filter der beiden Hauptdetektoren (1) der Erkennungseinheiten (10) identisch sind.

20. Gerät nach Anspruch 18, wobei acht zweite Filter jeweils den
Zusatzdetektoren (2a - 2d) der beiden Erkennungseinheiten (10) zugeordnet sind und wobei die jeweiligen ersten Filter der Hauptdetektoren (1) der beiden Erkennungseinheiten (10) jeweils spektrale Transmissionsfenster aufweisen, die unterschiedlich sind.

21. Verfahren zur Ausführung eines Bildgebungsgeräts, das vorgesehen ist, an Bord eines Satelliten (S) oder eines Flugzeugs mitgeführt zu werden, umfassend die folgenden Schritte:
- Bereitstellen von zumindest zwei Lichtstromerkennungseinheiten (10), wobei jede Erkennungseinheit auf einem für die Erkennungseinheit bestimmten Monoblock-Substrat und getrennt von der anderen Erkennungseinheit Folgendes umfasst:
. einen Hauptdetektor (1) des unidirektionalen Typs mit mehreren parallelen Zeilen erster lichtempfindlicher Elemente (11), die in einer Zeilenrichtung (DL) nebeneinanderliegen, wobei die Zeilen in einer zur Zeilenrichtung senkrechten Spaltenrichtung (DC) verschoben sind und sich in der Zeilenrichtung über eine selbe erste Länge erstrecken, wobei der Hauptdetektor eine unidirektionale, zur Spaltenrichtung parallele Zeilentransfer (TL)-Richtung aufweist; und
. zumindest einen Zusatzdetektor (2a - 2d), der jeweils zumindest eine Zeile zweiter lichtempfindlicher Elemente (21), die parallel zur Zeilenrichtung (DL) nebeneinanderliegen, umfasst, wobei sich die Zeile zweiter lichtempfindlicher Elemente in der Zeilenrichtung über eine zweite Länge im Bereich des 0,9- bis 1,1-fachen der ersten Länge erstreckt und zu den Zeilen des Hauptdetektors (1) parallel zur Spaltenrichtung (DC) verschoben ist und wobei jeder Zusatzdetektor (2a - 2d) geeignet ist, Bilder zu erfassen, die sich in der Brennebene (PF) parallel zur Spaltenrichtung (DC) bewegen;
- Bereitstellen einer Ansichtenaufnahmeoptik (100), die geeignet ist, ein Bild in einer Brennebene (PF) auszubilden;
- Anordnen und Ausrichten der jeweiligen Substrate der beiden Erkennungseinheiten (10) in derselben Brennebene (PF) der Ansichtenaufnahmeoptik (100), sodass die jeweiligen Spaltenrichtungen (DC) der Erkennungseinheiten (10) zueinander parallel sind und sodass ferner die jeweiligen Randspalten der Hauptdetektoren (1) der beiden Erkennungseinheiten, die sich an den zu einer selben Seite der Brennebene (PF) ausgerichteten Rändern der Hauptdetektoren befinden, eine Verschiebung zueinander aufweisen, die, in der Zeilenrichtung (DL) gemessen, geringer als 5 % der ersten Länge ist;
- für jeden Hauptdetektor (1): Anordnen eines ersten Filters, um den auf die ersten lichtempfindlichen Elemente (11) des Hauptdetektors treffenden Lichtstrom spektral zu filtern, mit einem ersten spektralen Transmissionsfenster und
- für jeden Zusatzdetektor (2a - 2d): Anordnen eines zweiten Filters, um den auf die zweiten lichtempfindlichen Elemente (21) des Zusatzdetektors treffenden Lichtstrom spektral zu filtern, mit einem zweiten spektralen Transmissionsfenster, das sich bei einer selben Erkennungseinheit vom ersten spektralen Transmissionsfenster unterscheidet.

22. Verfahren nach Anspruch 21, das ausgeführt wird, damit das Bildgebungsgerät einem der Ansprüche 1 bis 20 entspricht.

## Claims

1. Imaging device intended to be placed on board a satellite (S) or an aircraft, comprising:
- imaging optics (100), suitable for forming an image in a focal plane (PF);
- at least two luminous flux detector arrays (10), each separately comprising:
. a main detector (1) of unidirectional type with several parallel rows (L) of first photosensitive elements (11) that are juxtaposed in a row direction (DL), said rows being offset in a column direction (DC) perpendicular to the row direction and all extending over a same first length in said row direction, said main detector having a unidirectional row transfer direction (TL) parallel to the column direction; and
. at least one additional detector (2a-2d), each comprising at least one row of second photosensitive elements (21) that are juxtaposed parallel to the row direction (DL), each additional detector being suitable for capturing images which moves within the focal plane (PF) parallel to the column direction;
- for each main detector (1), a first filter arranged for spectrally filtering the luminous flux reaching the first photosensitive elements (11) of said main detector, with a first spectral transmission window; and
- for each additional detector (2a-2d), a second filter arranged for spectrally filtering the luminous flux reaching the second photosensitive elements (21) of said additional detector, with a second spectral transmission window different from the first spectral transmission window for the same detector array (10),
in which, for each detector array (10) separately from the other detector array, the main detector (1) and each additional detector (2a-2d) are produced on one and same single-piece substrate dedicated to said detector array, with the row of second photosensitive elements (21) extending in the row direction over a second length comprised between 0.9 and 1.1 times the first length, and being offset with respect to the rows of the main detector parallel to the column direction (DC),
the respective substrates of the two detector arrays (10) both being arranged in the same focal plane (PF) of the imaging optics (100), and oriented so that the respective column directions (DC) of said detector arrays are parallel to each other,
and said substrates of the two detector arrays (10) being also arranged in the focal plane (PF) so that respective edge columns of the main detectors (1) of said two detector arrays, situated on edges of said main detectors oriented towards one and same side of the focal plane (PF), have an offset between them, measured in the row direction (DL), which is less than 5% of said first length.

2. Device according to claim 1, in which the substrates of the two detector arrays (10) are also arranged in the focal plane (PF) so that the respective edge columns of the main detectors (1) of said two detector arrays are aligned with respect to each other in the column direction (DC).

3. Device according to any one of the preceding claims, in which the detector arrays (10) are identical.

4. Device according to any one of claims 1 to 3, in which the respective substrates of the two detector arrays (10) are also oriented in the focal plane (PF) so that the respective row transfer directions (TL) of the main detectors (1) of said two detector arrays are identical.

5. Device according to claim 4, in which the respective first filters of the main detectors (1) are identical, and the respective substrates of the two detector arrays (10) are arranged and connected to provide main detector redundancy.

6. Device according to claim 4, in which the imaging optics (100) and the detector arrays (10) are arranged to produce stereoscopic imaging, with each detector array associated with a different sight direction through the imaging optics.

7. Device according to any one of claims 1 to 3, in which the respective substrates of the two detector arrays (10) are also oriented in the focal plane (PF) so that the respective row transfer directions (TL) of the main detectors (1) of said two detector arrays are opposite.

8. Device according to any one of the preceding claims, in which the first photosensitive elements (11) have a pitch smaller than a pitch of the second photosensitive elements (21) in the row direction (DL).

9. Device according to any one of the preceding claims, in which the main detector (1) of each detector array (10) is of TDI type.

10. Device according to any one of claims 1 to 9, in which at least one additional detector (2a-2d) of each detector array (10) is of bidirectional type, suitable for capturing an image which moves within the focal plane (PF) parallel to the column direction (DC), both in the row transfer direction (TL) of the main detector (1) and in the opposite direction to said row transfer direction.

11. Device according to claim 10, in which the additional detector (2a-2d) of the bidirectional type of each detector array (10) comprises a single row of second photosensitive elements (21).

12. Device according to claim 10, in which the additional detector (2a-2d) of the bidirectional type of each detector array (10), is of the TDI type having two opposite row transfer directions.

13. Device according to any one of claims 1 to 9, in which at least one additional detector (2a-2d) of each detector array (10) is also of the unidirectional type, with several parallel rows of second photosensitive elements (21) offset in the column direction (DC),
said additional detector of the unidirectional type (2a-2d) and the main detector (1) of one and same detector array (10) having identical transfer directions (TL).

14. Device according to claim 13, in which the additional detector (2a-2d) of each detector array (10) of the unidirectional type, is of the TDI type.

15. Device according to any one of the preceding claims, in which the second filters are identical for two additional detectors (2a-2d) belonging respectively to each of the two detector arrays (10), and the respective substrates of said two detector arrays are connected to provide additional detector redundancy.

16. Device according to any one of the preceding claims, in which each detector array (10) comprises several additional detectors (2a-2d) produced on the substrate of said detector array, while being offset in the column direction (DC), and each additional detector comprises at least one row of second photosensitive elements (21) juxtaposed parallel to the row direction (DL) of said detector array, and extending in said row direction over a second length comprised between 0.9 and 1.1 times the first length.

17. Device according to claim 16 in which, for at least one and same of the detector arrays (10), the second filters for two additional detectors (2a-2d) of said detector array are identical, and said additional detectors are connected to provide additional detector redundancy.

18. Device according to claim 16 or 17, in which each detector array (10) comprises the main detector (1) and at least four additional detectors (2a-2d).

19. Device according to claim 18, in which two identical sets of at least four second filters for additional detectors (2a-2d) each, are respectively associated with the two detector arrays (10),
and in which the respective first filters of the two main detectors (1) of said detector arrays (10) are identical.

20. Device according to claim 18, in which eight second filters are associated respectively with the additional detectors (2a-2d) of the two detector arrays (10),
and in which the respective first filters for the main detectors (1) of said two detector arrays (10) respectively have spectral transmission windows that are different.

21. Method for producing an imaging device intended to be placed on board a satellite (S) or an aircraft, comprising the following steps:
- providing at least two luminous flux detector arrays (10), each detector array comprising on a single-piece substrate dedicated to said detector array and separately from the other detector array:
. a main detector (1) of unidirectional type with several parallel rows of first photosensitive elements (11) that are juxtaposed in a row direction (DL), said rows being offset in a column direction (DC) perpendicular to the row direction and all extending over a same first length in said row direction, said main detector having a unidirectional row transfer direction (TL) parallel to the column direction; and
. at least one additional detector (2a-2d), each comprising at least one row of second photosensitive elements (21) that are juxtaposed parallel to the row direction (DL), said row of second photosensitive elements extending in the row direction over a second length comprised between 0.9 and 1.1 times the first length, and being offset with respect to the rows of the main detector (1) parallel to the column direction (DC), and each additional detector (2a-2d) being suitable for capturing images which moves within the focal plane (PF) parallel to the column direction (DC);
- providing imaging optics (100), suitable for forming an image in a focal plane (PF);
- arranging and orienting the respective substrates of the two detector arrays (10) in the same focal plane (PF) of the imaging optics (100), so that the respective column directions (DC) of said detector arrays (10) are parallel to each other, and so that the respective edge columns of the main detectors (1) of said two detector arrays, situated on edges of said main detectors oriented towards one and same side of the focal plane (PF), have an offset between them, measured in the row direction (DL), which is less than 5% of said first length;
- for each main detector (1): arranging a first filter for spectrally filtering the luminous flux reaching the first photosensitive elements (11) of said main detector, with a first spectral transmission window; and
- for each additional detector (2a-2d): arranging a second filter for spectrally filtering the luminous flux reaching the second photosensitive elements (21) of said additional detector, with a second spectral transmission window different from said first spectral transmission window, for the same detector array.

22. Method according to claim 21, implemented so that the imaging device is according to any one of claims 1 to 20.
